# EUROPÄISCHE PATENTSCHRIFT

(11) **EP 3 596 090 B1**
(45) Veröffentlichungstag und Bekanntmachung des Hinweises auf die Patenterteilung: **22.07.2020**
(21) Anmeldenummer: 17823107.2
(22) Anmeldetag: 19.12.2017
(51) Int. Cl.: C07F 5/02, C07F 7/08

(54) **HYDROSILYLIERUNG MIT SILICIUM(IV)-GRUPPIERUNG ALS KATALYSATOR**
HYDROSILYLATION WITH SILICON(IV) MOIETY AS CATALYST
HYDROSILYLATION AVEC UN GROUPEMENT SILICIUM(IV) EN TANT QUE CATALYSEUR

(43) Veröffentlichungstag der Anmeldung: 22.01.2020
(73) Patentinhaber: Wacker Chemie AG, 81737 München (DE)
(72) Erfinder: FRITZ-LANGHALS, Elke, 85521 Ottobrunn (DE)
(74) Vertreter: Mai, Marit
(86) Internationale Anmeldenummer: PCT/EP2017/083669
(87) Internationale Veröffentlichungsnummer: WO 2019/120497

(56) Entgegenhaltungen:
- WO-A1-2017/174290

## Beschreibung

Die Erfindung betrifft eine hydrosilylierbare Mischung, die eine Wasserstoff-verbrückte kationische Silicium(IV)-Gruppierung als Katalysator enthält und ein Verfahren zur Hydrosilylierung dieser Mischung.

Die Addition von Hydrosiliciumverbindungen an Alkene und Alkine unter Ausbildung von Si-C-Verknüpfungen spielt in der Technik eine wichtige Rolle. Diese als Hydrosilylierung bezeichneten Reaktionen werden beispielsweise zur Vernetzung von Siloxanen oder zur Einführung von funktionellen Gruppen in Silane oder Siloxane eingesetzt. Die Hydrosilylierung läuft nur katalysiert ab; in der Regel werden Edelmetall-Komplexe verwendet. Sehr häufig werden Platin-, Rhodium- oder Iridium-Komplexe eingesetzt, die das Verfahren erheblich verteuern, insbesondere dann, wenn das Edelmetall nicht zurückgewonnen werden kann und im Produkt verbleibt.
Die Edelmetalle stehen als Rohstoffe nur begrenzt zur Verfügung und sind nicht vorhersehbaren und nicht beeinflussbaren Preisschwankungen ausgesetzt. Ein Hydrosilylierungskatalysator, der frei von Edelmetall ist, ist daher von großem technischem Interesse.
Die Aufgabe der vorliegenden Erfindung besteht daher darin, einen edelmetallfreien Hydrosilylierungskatalysator bereitzustellen.
In der WO 2017/174290 sind kationische Silicium(II)Verbindungen als Hydrosilylierungskatalysatoren beschrieben. Die Wirkung als Katalysator beruht u.a. auf freien Valenzen am kationischen Siliciumzentrum, welche die koordinative Bindung der Edukte für die Hydrosilylierung ermöglicht. Von Nachteil ist bei diesen Verbindungen die aufwändige Herstellung, die dem technischen Einsatz im Wege steht.

In Can. J. Chem. 2003, 81, 1223 wird eine intramolekulare Hydrosilylierung unter Beteiligung von Silyliumionen (R₃Si⁺) mit Silicium in der Oxidationsstufe IV beschrieben. Bei dieser reagiert ein durch Wechselwirkung mit der intramolekularen Doppelbindung besonders stabilisiertes Silicium(IV)-Kation (sogenannte nicht-klassische Struktur) in einer Hydrosilylierungsreaktion mit der Doppelbindung. Dieses Kation wird jedoch in situ erzeugt und im Zuge der Reaktion vollständig verbraucht, und stellt daher keinen Katalysator dar. Dies gilt auch für die in J. Org. Chem. 1999, 64, 2729 und in J. Am. Chem. Soc. 1996, 118, 7867 beschriebene Addition von Triethylsilylkationen an 1,1-Diphenylethylen. Das in situ erzeugte Triethylsilylkation addiert selbst irreversibel an die Doppelbindung und wird daher ebenfalls im Prozess verbraucht. Die bislang verwendeten Silylium(IV)-Kationen stellen somit keine Katalysatoren im eigentlichen Sinn dar, da sie durch die Umsetzung selbst verbraucht werden. Insbesondere bei technischen Anwendungen sind jedoch Katalysatoren erwünscht, welche sich während des Hydrosilylierungsprozesses nicht verändern.

Gegenstand der Erfindung ist eine hydrosilylierbare Mischung M enthaltend
**(A)** Verbindung mit mindestens einem direkt an Si-gebundenen Wasserstoffatom,
**(B)** Verbindung, die mindestens eine Kohlenstoff-Kohlenstoff-Mehrfachbindungen enthält und
**(C)** Verbindung, die mindestens eine intramolekular vorliegende kationische Si-H-Si-Gruppierung mit Silicium in der Oxidationsstufe IV enthält.

Gegenstand der Erfindung ist auch ein Verfahren zur Hydrosilylierung, bei dem
**(A)** Verbindung mit mindestens einem direkt an Si-gebundenen Wasserstoffatom,
**(B)** Verbindung, die mindestens eine Kohlenstoff-Kohlenstoff-Mehrfachbindungen enthält in Gegenwart von
**(C)** Verbindung, die mindestens eine intramolekular vorliegende kationische Si-H-Si-Gruppierung mit Silicium in der Oxidationsstufe IV enthält,
umgesetzt werden.

Die Mischung **M** ist ohne Edelmetallkatalysator hydrosilylierbar, sie enthält als hochwirksamen Hydrosilylierungskatalysator Verbindung **C.**

Es wurde nun überraschend gefunden, dass die Verbindungen **C,** nämlich kationische Silicium(IV)-Verbindungen mit einer intramolekularen Wasserstoffbrücke, Hydrosilylierungen sehr effizient katalysieren.
Dies war insofern überraschend, da die Siliciumzentren in **C** durch die Wasserstoffverbrückung abgesättigt sind und über keine freien Valenzen verfügen.
Im Gegensatz zu den in der Literatur genannten Silicium(IV)-Kationen werden die Verbindungen **C** bei der Hydrosilylierung nicht verbraucht und erfüllen dadurch eine wichtige Voraussetzung für den wirtschaftlichen technischen Einsatz. Es ist möglich, die Verbindungen **C** mehrfach einzusetzen, was einen hohen technischen und ökonomischen Vorteil darstellt und den Einsatz attraktiv macht.

Ein weiterer Vorteil ist die gegenüber den kationischen Silicium(II)-Verbindungen erheblich bessere Zugänglichkeit der Verbindungen **C.**

Die Verbindung **A** mit mindestens einem direkt an Si gebundenen Wasserstoffatom hat bevorzugt die allgemeine Formel I

**R¹R²R³Si-H** **(I)**

wobei die Reste **R¹, R²** und **R³** unabhängig voneinander die Bedeutung Wasserstoff, Halogen, Silyloxyrest, Kohlenwasserstoffrest oder Kohlenwasserstoffoxyrest haben,
wobei die Kohlenstoffkette im Kohlenwasserstoffrest oder Kohlenwasserstoffoxyrest durch Halogenatome substituiert sein kann, wobei die Kohlenstoffkette im Kohlenwasserstoffrest oder Kohlenwasserstoffoxyrest durch nicht benachbarte Sauerstoff-, Schwefel-, N**R¹³**- oder P**R¹⁴**-Gruppen unterbrochen sein kann und wobei **R¹³** und **R¹⁴** unabhängig voneinander die Bedeutung Wasserstoff oder Kohlenwasserstoffrest haben.

Besonders bevorzugt bedeuten die Reste **R¹, R²** und **R³** unabhängig voneinander Wasserstoff, Halogen, unverzweigter, verzweigter, linearer, acyclischer oder cyclischer, gesättigter oder einfach oder mehrfach ungesättigter C1-C20-Kohlenwasserstoffrest oder unverzweigter, verzweigter, linearer oder cyclischer, gesättigter oder einfach oder mehrfach ungesättigter C1-C20-Kohlenwasserstoffoxyrest, wobei die Kohlenstoffkette im Kohlenwasserstoffrest oder Kohlenwasserstoffoxyrest durch Halogenatome substituiert sein kann, wobei die Kohlenstoffkette im Kohlenwasserstoffrest oder Kohlenwasserstoffoxyrest durch nicht benachbarte Sauerstoff-, Schwefel-, N**R¹³**- oder P**R¹⁴**-Gruppen unterbrochen sein kann,
oder Silyloxyrest der allgemeinen Formel II

**(SiO_{4/2})ₐ(R^{x}SiO_{3/2})_{b}(R^{x}₂SiO_{2/2})_{c}(R^{x}₃SiO_{1/2})_{d}-** **(II)**

in der
**R^{x}** unabhängig voneinander Wasserstoff, Halogen, unverzweigter, verzweigter, linearer, acyclischer oder cyclischer, gesättigter oder einfach oder mehrfach ungesättigter C1-C20-Kohlenwasserstoffrest oder unverzweigter, verzweigter, linearer oder cyclischer, gesättigter oder einfach oder mehrfach ungesättigter C1-C20-Kohlenwasserstoffoxyrest bedeuten, wobei die Kohlenstoffkette im Kohlenwasserstoffrest oder Kohlenwasserstoffoxyrest durch Halogenatome substituiert sein kann, wobei die Kohlenstoffkette im Kohlenwasserstoffrest oder Kohlenwasserstoffoxyrest durch nicht benachbarte Sauerstoff-, Schwefel-, N**R¹³**- oder P**R¹⁴**-Gruppen unterbrochen sein kann,
**a, b, c** und **d** unabhängig voneinander ganzzahlige Werte von 0 bis 100000 bedeuten, wobei die Summe aus **a, b, c** und **d** zusammen mindestens den Wert 1, insbesondere mindestens 2 annimmt.

Vorzugsweise bedeuten **R¹³** und **R¹⁴** unabhängig voneinander C1-C6 Alkyl, Methyl, Ethyl, Propyl oder Phenyl.

Ganz besonders bevorzugt bedeuten die Reste **R¹, R²** und **R³** unabhängig voneinander Wasserstoff, Chlor, C1-C3-Alkyl- oder Alkylenrest, Phenylrest, C1-C4 Alkoxyrest oder Silyloxyrest der allgemeinen Formel II, in der **R^{x}** unabhängig voneinander Wasserstoff, Chlor, C1-C6 Alkyl oder Alkylen, Phenyl oder C1-C6 Alkoxy bedeuten.
Besonders bevorzugte Reste **R¹, R²** und **R³** sind die Reste Methyl, Ethyl, Propyl, Phenyl, Chlor oder Silyloxyrest, insbesondere der allgemeinen Formel II.
Besonders bevorzugte Reste **R^{x}** sind die Reste Methyl, Ethyl, Propyl, Phenyl und Chlor.
Beispiele für Verbindungen **A** der allgemeinen Formel (I) sind die folgenden Silane (Ph = Phenyl, Me = Methyl, Et = Ethyl): Me₂SiH₂, Me₃SiH, Et₃SiH, Me₂PhSiH, MePh₂SiH, Me₂ClSiH, Et₂ClSiH, MeCl₂SiH, Cl₃SiH, und die folgenden Siloxane: HSiMe₂-O-SiMe₂H, Me₃Si-O-SiHMe-O-SiMe₃, H-SiMe₂-(O-SiMe₂)ₘ-O-SiMe₂-H mit m = 1 bis 20000, Me₃Si-O-(SiMe₂-O)ₙ(SiHMe-O)ₒ-SiMe₃ mit n = 1 bis 20000 und o = 1 bis 20000.
Die Verbindung **A** kann auch eine Mischung verschiedener Verbindungen der allgemeinen Formeln **(I)** sein, bei denen gegebenenfalls die Reste **R¹, R²** und **R³** verschiedene Reste der allgemeinen Formel **(II)** sein können.

Die Verbindungen **B** mit mindestens einer Kohlenstoff-Kohlenstoff-Mehrfachbindung werden vorzugsweise ausgewählt aus Verbindungen mit mindestens einer Kohlenstoff-Kohlenstoff-Doppelbindung der allgemeinen Formel **IIIa**

R⁴R⁵C=CR⁶R⁷ **(IIIa),**

und aus Verbindungen mit mindestens einer Kohlenstoff-Kohlenstoff-Dreifachbindung der allgemeinen Formel **IIIb**

R⁸CCR⁹ **(IIIb),**

wobei
**R⁴, R⁵, R⁶, R⁷, R⁸** und **R⁹** unabhängig voneinander linearer, verzweigter, acyclischer oder cyclischer, gesättigter oder einfach oder mehrfach ungesättigter C1-C20-Kohlenwasserstoffrest bedeuten, wobei die Kohlenstoffkette im Kohlenwasserstoffrest oder Kohlenwasserstoffoxyrest durch Halogenatome substituiert sein kann, wobei die Kohlenstoffkette im Kohlenwasserstoffrest oder Kohlenwasserstoffoxyrest durch nicht benachbarte Sauerstoff-, Schwefel-, N**R¹³**- oder P**R¹⁴**-Gruppen unterbrochen sein kann.

Es können auch Gemische der Verbindungen der allgemeinen Formel **IIIa** und **IIIb** vorliegen.

Bevorzugte Halogensubstituenten an den Resten **R⁴, R⁵, R⁶, R⁷, R⁸, R⁹, R¹³** und **R¹⁴** sind Fluor, Chlor und Brom.

Besonders bevorzugt bedeuten die Reste **R⁴, R⁵, R⁶, R⁷, R⁸** und **R⁹** unabhängig voneinander Wasserstoff, linearer, verzweigter, acyclischer oder cyclischer, gesättigter oder einfach oder mehrfach ungesättigter C1-C6-Kohlenstoffrest, welcher durch eine oder mehrere Heteroatomgruppierungen, insbesondere die Gruppierungen Halogen, insbesondere Chlor, Amino, Nitril, Alkoxy, COO**R^{z}**, O-CO-**R^{z}**, NH-CO-**R^{z}**, O-CO-O**R^{z}** substituiert sein kann, wobei **R^{z}** unabhängig voneinander Wasserstoff, Chlor, C1-C6 Alkyl oder Alkylen, Phenyl oder C1-C6 Alkoxy bedeutet.

Bevorzugt bedeutet einer oder mehrere der Reste **R⁴** bis **R⁹** Wasserstoff.

Ganz besonders bevorzugt handelt es sich bei der Verbindung der allgemeinen Formel **IIIa** um ein Silan oder ein Siloxan der allgemeinen Formel **R¹⁰R¹¹R¹²**Si-CH=CH₂, worin die Reste **R¹⁰, R¹¹** und **R¹²** die oben für **R¹, R²** und **R³** angegebenen Bedeutungen und bevorzugten Bedeutungen haben.

Besonders bevorzugte Reste **R¹⁰, R¹¹** und **R¹²** sind die Reste Methyl, Ethyl, Propyl, Phenyl, Chlor oder Silyloxyrest, insbesondere der allgemeinen Formel II.

Beispiele für Verbindungen **B** sind Ethylen, Propylen, 1-Butylen, 2-Butylen, Cyclohexen,
Styrol, α-Methylstyrol, 1,1-Diphenylethylen, cis-Stilben, trans-Stilben, Allylchlorid, Allylamin, Acrylnitril, Allylglycidylether, Vinylacetat, Vinyl-Si(CH₃)₂-[O-Si(CH₃)₂]ₙ-Vinyl mit n = 0 bis 10000, Me₃Si-O-(SiMeVinyl-O)ₘ-(SiMe₂-O)ₙ-SiMe₃ mit m = 1 bis 10000 und n = 0 bis 10000, Trimethylsilylacetylen, Acetylen, Propin, 1-Butin, 2-Butin, Diphenylacetylen und Phenylacetylen.

Die Verbindungen **A** und **B** können auch durch eine oder mehrere chemische Bindungen miteinander verbunden sein, d.h. sie können beide in einem Molekül vorliegen.

Die Verbindung **C** enthält mindestens eine intramolekulare kationische Si-H-Si-Gruppierung mit Silicium in der Oxidationsstufe IV.

Bevorzugt ist die Verbindung **C** eine kationische Si(IV)-Verbindung der allgemeinen Formel **IV** 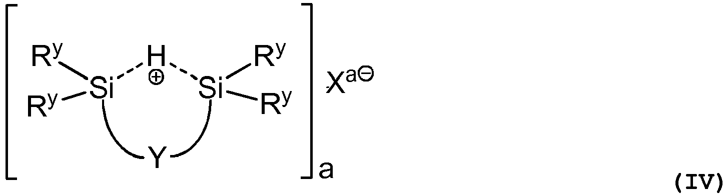 worin
**Y** einen zweibindigen gesättigten oder einfach oder mehrfach ungesättigten C2 bis C50 Kohlenwasserstoffrest bedeutet, welcher durch Halogenatome, Silylgruppen, Silyloxygruppen, Alkoxygruppen, Thioethergruppen, NR¹⁵R¹⁶-Gruppen oder PR¹⁷R¹⁸-Gruppen substituiert sein kann,oder welcher durch Dialkylsilyl-, Alkylsilyl- oder nicht benachbarte Sauerstoff-, Schwefel-, , =N-, -NR¹³-, =P- oder -PR¹⁴-Gruppen unterbrochen sein kann.

**R¹⁵, R¹⁶, R¹⁷** und **R¹⁸** haben die Bedeutungen und bevorzugten Bedeutungen von **R¹³** und **R¹⁴.**

Bevorzugt ist **Y** ein C2 bis C50 Kohlenwasserstoffrest, welcher durch SiR^{z}₃- oder SiR^{z}₃O -Gruppen oder Alkoxygruppen, substituiert sein kann,

**R^{z}** hat die Bedeutungen und bevorzugten Bedeutungen von **R^{x}**.

Besonders bevorzugt bedeutet **Y** einen gegebenenfalls mit C1-C20 Trialkylsilylrest, C1-C20 Trialkylsilyloxyrest, C1-C20 Kohlenwasserstoffrest oder einem C1-C20 Kohlenwasserstoffoxyrest substituierten bi-, tri- oder polycyclischen aromatischen, aliphatisch-aromatischen oder aliphatischen Rest, bei dem die beiden Siliciumatome der allgemeinen Formel IV über einen ungesättigten oder gesättigten C3 oder C4 Rest miteinander verbunden sind.
Bevorzugte Beispiele für **Y** sind:
1,3-Propylen, 1,4-Butylen, 1,8-Naphthylen-, 1,2-Phenylen- oder Reste der folgenden Formeln

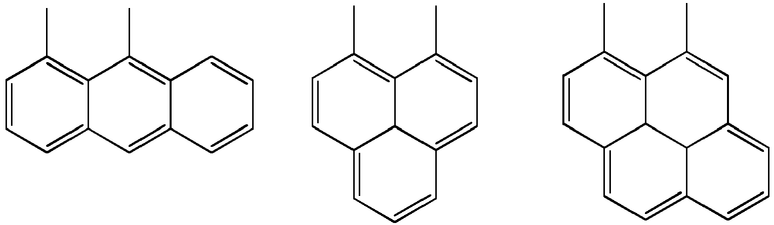

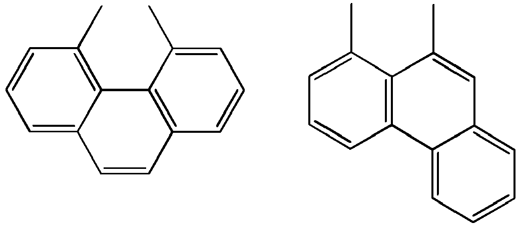

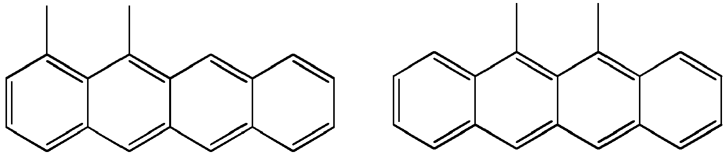

**R^{y}** wird ausgewählt aus beliebigen einwertigen Resten und mehrwertigen Resten, die zur Bildung anellierter Ringe auch miteinander verbunden sein können.
Die Reste **R^{y}** bedeuten unabhängig voneinander bevorzugt Wasserstoff, C1 bis C50 Kohlenwasserstoffreste, insbesondere lineare oder verzweigte, acyclische oder cyclische, gesättigte oder ein- oder mehrfach ungesättigte C1-C20 Alkyl- oder Aryl-, besonders bevorzugt C1-C3 Alkyl- oder Phenylreste, ganz besonders bevorzugt Methyl- oder Phenylreste, wobei die Kohlenstoffkette durch Dialkylsilyl- und Alkylsilylunterbrochen sein kann.
Beispiele für Reste **R^{y}** sind Alkylreste wie der Methyl-, Ethyl-, n-Propyl-, iso-Propyl-, n-Butyl-, sec-Butyl-, iso-Butyl-, tert.-Butyl-, n-Pentyl-, sec-Pentyl, iso-Pentyl-, neo-Pentyl-, tert.-Pentylrest; Hexylreste, wie der n-Hexylrest; Heptylreste, wie der n-Heptylrest; Octylreste, wie der n-Octylrest und iso-Octylreste, wie der 2,4,4-Trimethylpentylrest; Nonylreste, wie der n-Nonylrest; Decylreste, wie der n-Decylrest; Dodecylreste, wie der n-Dodecylrest; Hexadecylreste, wie der n-Hexadecylrest; Octadecylreste, wie der n-Octadecylrest; Cycloalkylreste, wie der Cyclopentyl-, Cyclohexyl-, Cycloheptylrest und Methylcyclohexylrest; Arylreste, wie der Phenyl-, Naphthyl-, Anthryl- und Phenanthrylrest; Alkarylreste, wie der o-, m- und p-Tolyl-, Xylyl-, Mesitylenyl- und o-, m- und p-Ethylphenylrest; und Alkarylreste, wie der Benzylrest, der α- und der β-Phenylethylrest.

**X^{a-}** bedeutet ein beliebiges **a** wertiges Anion, welches unter den Reaktionsbedingungen nicht mit der kationischen Siliciumstruktur reagiert. Es kann sowohl anorganisch als auch organisch sein. Vorzugsweise hat **a** die Werte 1, 2, oder 3, insbesondere 1.

**X⁻** bedeutet bevorzugt Halogen oder ein komplexes Anion wie BF₄⁻, ClO₄⁻, AlZ₄⁻, MF₆⁻ mit Z = Halogen und M = P, As oder Sb, oder Tetraarylboratanion, wobei der Arylrest bevorzugt Phenyl oder fluoriertes oder mit Perfluoralkylresten substituiertes Phenyl bedeutet, einwertiges polyedrisches Anion, wie z.B. Carboratanion, oder Alkoxy- und Aryloxymetallation.

Beispiele für Anionen **X⁻** sind Tetrachlorometallate [MCl₄]⁻ mit M = Al, Ga, Tetrafluoroborate [BF₄]⁻, Hexafluorometallate [MF₆]⁻ mit M = As, Sb, Ir, Pt, Perfluoroantimonate [Sb₂F₁₁]⁻, [Sb₃F₁₆]⁻ und [Sb₄F₂₁]⁻, Triflat (= Trifluoromethanesulfonat) [OSO₂CF₃]⁻, Tetrakis(trifluormethyl)borat [B(CF₃)₄]⁻, Tetrakis(pentafluorophenyl)metallate [M(C₆F₅)₄]⁻ mit M = B, Al, Ga, Tetrakis(pentachlorophenyl)borat [B(C₆Cl₅)₄]⁻, Tetrakis [(2,4,6-trifluoromethyl(phenyl)]borat {B[C₆H₂(CF₃)₃]}⁻, [Bis[tris(pentafluorophenyl)]hydroxid {HO[B(C₆F₅)₃]₂}⁻, *Closo-*Carborate [CHB₁₁H₅Cl₆]⁻, [CHB₁₁H₅Br₆]⁻, [CHB₁₁(CH₃)₅Br₆]⁻, [CHB₁₁F₁₁]⁻ , [C(Et)B₁₁F₁₁]⁻, [CB₁₁(CF₃)₁₂]⁻ und B₁₂Cl₁₁N(CH₃)₃]⁻, Tetra (perfluoroalkoxy) aluminate [Al(OR^{PF})₄]⁻, Tris(perfluoroalkoxy)fluoroaluminate [FAl(OR^{PF})₃]⁻, Hexakis(oxypentafluorotellur)antimonat [Sb(OTeF₅)₆]⁻.

Eine Übersicht über besonders bevorzugte komplexe Anionen **X⁻** findet sich z.B. in Krossing et. al., Angew. Chem. 2004, 116, 2116.

Die Herstellung der Wasserstoff-verbrückten kationischen Si(IV)-Verbindung der allgemeinen Formel (IV) kann beispielsweise durch Umsetzung des entsprechenden Bis-Hydrosilans mit Trityliumsalzen erfolgen, siehe die folgende Reaktionsgleichung:

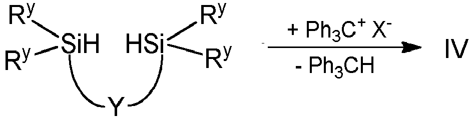

Das Anion **X⁻** des Trityliumsalzes bildet dann das Gegenion der Wasserstoff-verbrückten kationischen Si(IV)-Verbindung der allgemeinen Formel IV.
Eine Herstellungsmethode ist in J. Am. Chem. Soc. 2006, 128, 9676 beschrieben.

Bei dem Verfahren wird Verbindung **A** mit Verbindung **B** in Gegenwart von Verbindung **C** als Hydrosilylierungskatalysator umgesetzt.

Das molare Verhältnis der in Verbindungen **A** vorhandenen Si-H zu den in Verbindungen **B** vorhandenen Kohlenstoff-Kohlenstoff-Mehrfachbindungen beträgt bevorzugt mindestens 1:100 und höchstens 100:1, besonders bevorzugt mindestens 1:10 und höchstens 10:1, ganz besonders bevorzugt mindestens 1:2 und höchstens 2:1.

Das molare Verhältnis zwischen der Verbindung **C** und den in der Verbindung **A** vorhandenen Si-H-Gruppierungen beträgt bevorzugt mindestens 1:10⁷ und höchstens 1:1, besonders bevorzugt mindestens 1:10⁶ und höchstens 1:10, ganz besonders bevorzugt mindestens 1:10⁵ und höchstens 1:50.
Die Verbindungen **A, B** und **C** können in beliebiger Reihenfolge vermischt werden, wobei das Vermischen in einer der Fachkraft bekannten Weise erfolgt. Ebenso ist es möglich, die Verbindungen **A** und **B** oder **A** und **C** oder **B** und **C** zu mischen und dann die noch fehlende Verbindung hinzuzufügen. In einer weiteren Ausführungsform wird die Verbindung **C** in der Verbindung **A** oder **B** oder im Gemisch der beiden Verbindungen beispielsweise durch die oben beschriebene Protonierungsreaktion erzeugt.

Die Umsetzung der Verbindungen **A** und **B** in Gegenwart der Verbindung **C** kann mit oder ohne Zusatz einer oder mehrerer Lösemittel durchgeführt werden. Der Anteil des Lösemittels oder des Lösemittelgemisches beträgt bezogen auf die Summe der Verbindungen **A** und **B** bevorzugt mindestens 0,1 Gew.% und höchstens die 1000-fache Gewichtsmenge, besonders bevorzugt mindestens 10 Gew. % und höchstens die 100-fache Gewichtsmenge, ganz besonders bevorzugt mindestens 30 Gew. % und höchstens die 10-fache Gewichtsmenge.

Als Lösemittel können bevorzugt aprotische Lösemittel, beispielsweise Kohlenwasserstoffe wie Pentan, Hexan, Heptan, Cyclohexan oder Toluol, Chlorkohlenwasserstoffe wie Dichlormethan, Chloroform, Chlorbenzol oder 1,2-Dichlorethan, Ether wie Diethylether, Methyl-tert.-butylether, Anisol, Tetrahydrofuran oder Dioxan, oder Nitrile wie z.B. Acetonitril oder Propionitril, eingesetzt werden.

Die Mischung **M** kann beliebige weitere nicht mit den Verbindungen **A, B** und **C** reaktiven Zusätze **D** wie z.B. Prozesshilfsstoffe, z.B. Emulgatoren, Füllstoffe, z.B. hochdisperse Kieselsäure oder Quarz, Stabilisatoren, z.B. Radikalinhibitoren, Pigmente, z.B. Farbstoffe oder Weißpigmente, z.B. Kreide oder Titandioxid enthalten. Die Hydrosilylierung läuft auch in Gegenwart dieser Zusätze **D** ab.

Die Umsetzung kann unter Umgebungsdruck oder unter vermindertem oder unter erhöhtem Druck durchgeführt werden.
Der Druck beträgt bevorzugt mindestens 0,01 bar und höchstens 100 bar, besonders bevorzugt mindestens 0,1 bar und höchstens 10 bar, ganz besonders bevorzugt wird die Umsetzung bei Umgebungsdruck durchgeführt. Sind jedoch an der Umsetzung Verbindungen beteiligt, die bei der Reaktionstemperatur gasförmig vorliegen, erfolgt bevorzugt eine Umsetzung unter erhöhtem Druck, besonders bevorzugt bei dem Dampfdruck des Gesamtsystems.

Die Umsetzung von **A** und **B** in Gegenwart von **C** erfolgt bevorzugt bei Temperaturen zwischen mindestens - 100°C und höchstens + 250°C, besonders bevorzugt zwischen mindestens - 20°C und höchstens 150°C, ganz besonders bevorzugt zwischen mindestens 0°C und höchstens 100°C.

Alle vorstehenden Symbole der vorstehenden Formeln weisen ihre Bedeutungen jeweils unabhängig voneinander auf.

Es sind, falls jeweils nicht anders angegeben, alle Mengen- und Prozentangaben auf das Gewicht bezogen, und alle Temperaturen 20°C.

### Beispiel 1

Alle Arbeitsschritte wurden unter Ar ausgeführt. 201 mg (1,69 mmol) α-Methylstyrol, 253 mg (1,70 mmol) Pentamethyldisiloxan und 620 mg C₆D₆ wurden vermischt und bei Raumtemperatur unter Schütteln mit einer Lösung von 1,6 mg (1,7 µmol, 0,1 mol %, 2800 ppm - jeweils bezogen auf die Edukte) der Verbindung **IVa** in 27 mg C₆D₆ versetzt. Nach ca. 5 Min. Reaktionszeit zeigte das ¹H-NMR-Spektrum der Reaktionslösung vollständige Umsetzung an. Es bildete sich das Produkt Phenyl-CH(CH₃)-CH₂-Si(CH₃)₂-O-Si(CH₃)₃.

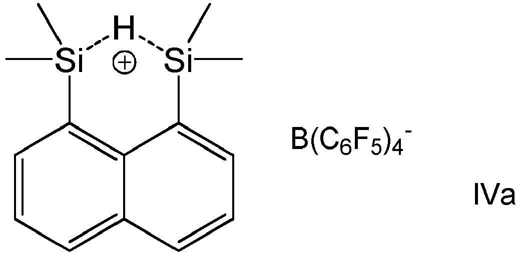

### Beispiel 2

Analog zu Beispiel 1 wurden 406 mg (3,44 mmol) α-Methylstyrol und 512 mg (3,45 mmol) Pentamethyldisiloxan ohne Solvens vermischt und eine Lösung von 0,34 mg (0,37 µmol, 0,011 mol %, 370 ppm - jeweils bezogen auf die Edukte) der Verbindung **IVa** in 11 mg CD₂Cl₂ umgesetzt. Nach 30 Min. war die Umsetzung vollständig. Es bildete sich das Produkt Phenyl-CH(CH₃)-CH₂-Si(CH₃)₂-O-Si(CH₃)₃.

### Beispiel 3

Analog zu Beispiel 1 wurden 204 mg (1,72 mmol) α-Methylstyrol, 252 mg (1,70 mmol) Pentamethyldisiloxan, 666 mg CD₂Cl₂ und eine Lösung von 1,5 mg (1,6 µmol, 0,1 mol %, 3300 ppm - jeweils bezogen auf die Edukte) der Verbindung **IVa** in 12 mg CD₂Cl₂ umgesetzt. Nach ca. 5 Min. Reaktionszeit zeigte das ¹H-NMR-Spektrum der Reaktionslösung vollständige Umsetzung an. Es bildete sich das Produkt Phenyl-CH (CH₃)-CH₂-Si(CH₃)₂-O-Si(CH₃)₃.

### Beispiel 4

Analog zu Beispiel 1 wurden 200 mg (1,69 mmol) α-Methylstyrol, 253 mg (1,70 mmol) Pentamethyldisiloxan, 667 mg CD₂Cl₂ und eine Lösung von 0,9 mg (0,98 µmol, 0,056 mol %, 2000 ppm - jeweils bezogen auf die Edukte) der Verbindung **IVa** in 20 mg CD₂Cl₂ umgesetzt. Nach ca. 30 Min. Reaktionszeit zeigte das ¹H-NMR-Spektrum der Reaktionslösung vollständige Umsetzung an. Es bildete sich das Produkt Phenyl-CH (CH₃)-CH₂-Si(CH₃)₂-O-Si(CH₃)₃.

### Beispiel 5

Analog zu Beispiel 1 wurden 203 mg (1,72 mmol) α-Methylstyrol, 257 mg (1,73 mmol) Pentamethyldisiloxan, 661 mg C₆D₆ und eine Lösung von 0,2 mg (0,2 µmol, 0,012 mol %, 400 ppm - jeweils bezogen auf die Edukte) der Verbindung **IVa** in 19 mg C₆D₆ umgesetzt. Nach ca. 2 Std. Reaktionszeit zeigte das ¹H-NMR-Spektrum ca. 50 % Umsatz an. Nach 24 Std. war die Umsetzung vollständig. Es bildete sich das Produkt Phenyl-CH(CH₃)-CH₂-Si(CH₃)₂-O-Si(CH₃)₃.

### Beispiel 6 (mehrfacher Einsatz des Katalysators)

Analog zu Beispiel 1 wurden 203 mg (1,72 mmol) α-Methylstyrol, 254 mg (1,71 mmol) Pentamethyldisiloxan, 666 mg CD₂Cl₂ und eine Lösung von 0,16 mg (0,17 µmol, 0,010 mol %, 350 ppm - jeweils bezogen auf die Edukte) der Verbindung **IVa** in 16 mg CD₂Cl₂ umgesetzt. Nach ca. 0,5 Std. Reaktionszeit zeigte das ¹H-NMR-Spektrum ca. 50 % Umsatz an. Nach 3 Std. wurde vollständiger Umsatz festgestellt. Es bildete sich das Produkt Phenyl-CH(CH₃)-CH₂-Si(CH₃)₂-O-Si(CH₃)₃. Nachweis der Katalysatoraktivität nach beendeter Umsetzung: Die vollständig umgesetzte Reaktionsmischung wird mit einer Mischung aus α-Methylstyrol (22 mg, 0,19 mmol) und Pentamethyldisiloxan (28 mg, 0,19 mmol) versetzt. Es erfolgt weitere Umsetzung, die Edukte sind nach 24 Std. vollständig umgesetzt (¹H-NMR-Untersuchung).
Die vollständig umgesetzte Reaktionsmischung wird erneut mit einer Mischung aus α-Methylstyrol (101 mg, 0,85 mmol) und Pentamethyldisiloxan (126 mg, 0,85 mmol) versetzt. Es erfolgt weitere Umsetzung, die Edukte sind nach 24 Std. vollständig umgesetzt gemäß ¹H-NMR-Untersuchung).

### Beispiel 7

Analog zu Beispiel 1 wurden 202 mg (1,71 mmol) α-Methylstyrol, 253 mg (1,71 mmol) Pentamethyldisiloxan, 613 mg *d₈*-Toluol und eine Lösung von 0,17 mg (0,18 µmol, 0,011 mol %, 370 ppm - jeweils bezogen auf die Edukte) der Verbindung **IVa** in 69 mg *d₈*-Toluol umgesetzt. Nach 24 Std. war die Umsetzung vollständig. Es bildete sich das Produkt Phenyl-CH(CH₃)-CH₂-Si(CH₃)₂-O-Si(CH₃)₃.

### Beispiel 8

Analog zu Beispiel 1 wurden 150 mg (1,78 mmol) 1-Hexen, 201 mg (1,48 mmol) Phenyldimethylsilan, 486 mg CD₂Cl₂ und eine Lösung von 0,68 mg (0,74 µmol, 0,050 mol %, 1900 ppm - jeweils bezogen auf die Edukte) der Verbindung **IVa** in 21 mg CD₂Cl₂ umgesetzt. Nach 24 Std. war die Umsetzung vollständig. Es bildete sich das Produkt Phenyl-SiMe₂-CH₂-(CH₂)₄-CH₃.

## Patentansprüche

1. Hydrosilylierbare Mischung **M** enthaltend
**(A)** Verbindung mit mindestens einem direkt an Si-gebundenen Wasserstoffatom,
**(B)** Verbindung, die mindestens eine Kohlenstoff-Kohlenstoff-Mehrfachbindungen enthält und
**(C)** Verbindung, die mindestens eine intramolekular vorliegende kationische Si-H-Si-Gruppierung mit Silicium in der Oxidationsstufe IV enthält.

2. Verfahren zur Hydrosilylierung, bei dem
**(A)** Verbindung mit mindestens einem direkt an Si-gebundenen Wasserstoffatom,
**(B)** Verbindung, die mindestens eine Kohlenstoff-Kohlenstoff-Mehrfachbindungen enthält in Gegenwart von
**(C)** Verbindung, die mindestens eine intramolekular vorliegende kationische Si-H-Si-Gruppierung mit Silicium in der Oxidationsstufe IV enthält,
umgesetzt werden.

3. Mischung **M** nach Anspruch 1 oder Verfahren nach Anspruch 2, bei dem die Verbindung **A** mit mindestens einem direkt an Si-gebundenen Wasserstoffatom die allgemeine Formel I
**R¹R²R³Si-H** **(I)**
aufweist, wobei die Reste **R¹, R²** und **R³** unabhängig voneinander die Bedeutung Wasserstoff, Halogen, Silyloxyrest, Kohlenwasserstoffrest oder Kohlenwasserstoffoxyrest haben,
wobei die Kohlenstoffkette im Kohlenwasserstoffrest oder Kohlenwasserstoffoxyrest durch Halogenatome substituiert sein kann, wobei die Kohlenstoffkette im Kohlenwasserstoffrest oder Kohlenwasserstoffoxyrest durch nicht benachbarte Sauerstoff-, Schwefel-, N**R¹³-** oder P**R¹⁴**-Gruppen unterbrochen sein kann und wobei **R¹³** und **R¹⁴** unabhängig voneinander die Bedeutung Wasserstoff oder Kohlenwasserstoffrest haben.

4. Mischung **M** nach Anspruch 1 oder 3 oder Verfahren nach Anspruch 2 oder 3, wobei die Verbindungen **B** mit mindestens einer Kohlenstoff-Kohlenstoff-Mehrfachbindung ausgewählt wird aus Verbindungen mit mindestens einer Kohlenstoff-Kohlenstoff-Doppelbindung der allgemeinen Formel **IIIa**
R⁴R⁵C=CR⁶R⁷ **(IIIa)**,
und aus Verbindungen mit mindestens einer Kohlenstoff-Kohlenstoff-Dreifachbindung der allgemeinen Formel **IIIb**
R⁸CCR⁹ **(IIIb),**
wobei
**R⁴, R⁵, R⁶, R⁷, R⁸** und **R⁹** unabhängig voneinander linearer, verzweigter, acyclischer oder cyclischer, gesättigter oder einfach oder mehrfach ungesättigter C1-C20-Kohlenwasserstoffrest bedeuten, wobei die Kohlenstoffkette im Kohlenwasserstoffrest oder Kohlenwasserstoffoxyrest durch Halogenatome substituiert sein kann, wobei die Kohlenstoffkette im Kohlenwasserstoffrest oder Kohlenwasserstoffoxyrest durch nicht benachbarte Sauerstoff-, Schwefel-, N**R¹³**- oder P**R¹⁴**-Gruppen unterbrochen sein kann.

5. Mischung **M** nach Anspruch 1, 3 oder 4 oder Verfahren nach Anspruch 2, 3 oder 4, wobei die Verbindung **C** eine kationische Si(IV)-Verbindung der allgemeinen Formel **IV** 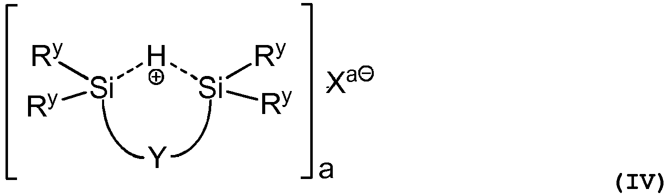 ist, worin
**Y** einen zweibindigen gesättigten oder einfach oder mehrfach ungesättigten C2 bis C50 Kohlenwasserstoffrest bedeutet, welcher durch Halogenatome, Silylgruppen, Silyloxygruppen, Alkoxygruppen, Thioethergruppen, NR¹⁵R¹⁶-Gruppen oder PR¹⁷R¹⁸-Gruppen substituiert sein kann, oder welcher durch Dialkylsilyl-, Alkylsilyl- oder nicht benachbarte Sauerstoff-, Schwefel-, , =N-, -NR¹³-, =P- oder -PR¹⁴-Gruppen unterbrochen sein kann,
**R¹⁵, R¹⁶, R¹⁷** und **R¹⁸** die Bedeutungen von **R¹³** und **R¹⁴** gemäß Anspruch 3 haben,
**R^{y}** ausgewählt wird aus einwertigen Resten und mehrwertigen Resten, die zur Bildung anellierter Ringe auch miteinander verbunden sein können,
**X^{a-}** ein **a** wertiges Anion bedeutet, welches unter den Reaktionsbedingungen nicht mit der kationischen Siliciumstruktur reagiert und
**a** die Werte 1, 2, oder 3 hat.

6. Mischung **M** oder Verfahren nach Anspruch 3, 4 oder 5, wobei der Silyloxyrest die allgemeine Formel **II**
**(SiO_{4/2})ₐ(R^{x}SiO_{3/2})_{b}(R^{x}₂SiO_{2/2})_{c}(R^{x}₃SiO_{1/2})_{d}-** **(II)**
aufweist, in der
**R^{x}** unabhängig voneinander Wasserstoff, Halogen, unverzweigter, verzweigter, linearer, acyclischer oder cyclischer, gesättigter oder einfach oder mehrfach ungesättigter C1-C20-Kohlenwasserstoffrest oder unverzweigter, verzweigter, linearer oder cyclischer, gesättigter oder einfach oder mehrfach ungesättigter C1-C20-Kohlenwasserstoffoxyrest bedeuten, wobei die Kohlenstoffkette im Kohlenwasserstoffrest oder Kohlenwasserstoffoxyrest durch Halogenatome substituiert sein kann, wobei die Kohlenstoffkette im Kohlenwasserstoffrest oder Kohlenwasserstoffoxyrest durch nicht benachbarte Sauerstoff-, Schwefel-, N**R¹³**- oder P**R¹⁴**-Gruppen unterbrochen sein kann,
**a, b, c** und **d** unabhängig voneinander ganzzahlige Werte von 0 bis 100000 bedeuten, wobei die Summe aus **a, b, c** und **d** zusammen mindestens den Wert 1 annimmt.

7. Mischung **M** oder Verfahren nach Anspruch 5 oder 6, wobei **X⁻** ausgewählt wird aus BF₄⁻, ClO₄⁻, AlZ₄⁻, MF₆⁻ mit **Z** = Halogen und **M** = P, As oder Sb, Tetraarylboratanion, wobei der Arylrest Phenyl oder fluoriertes oder mit Perfluoralkylresten substituiertes Phenyl bedeutet, aus einwertigem polyedrischen Anion, Alkoxy- und Aryloxymetallation, Tetrachlorometallaten [MCl₄]⁻ mit M = Al, Ga, Tetrafluoroboraten [BF₄]⁻, Hexafluorometallaten [MF₆]⁻ mit M = As, Sb, Ir, Pt, Perfluoroantimonaten [Sb₂F₁₁]⁻ , [Sb₃F₆₁]⁻ und [Sb₄F₂₁]⁻, Triflat (= Trifluoromethanesulfonat) [OSO₂CF₃]⁻, Tetrakis(trifluormethyl)borat [B(CF₃)₄]⁻, Tris(pentafluorophenyl)hydridometallaten [MH(C₆F₅)₃]⁻ mit M = B, Al, Ga, Tetrakis(pentachlorophenyl)borat [B(C₆Cl₅)₄]⁻, Tetrakis[(2,4,6-trifluoromethyl(phenyl)]borat {B[C₆H₂(CF₃)₃]}⁻, [Bis [tris (pentafluorophenyl)]hydroxid {HO[B(C₆F₅)₃]₂}⁻, Closo-Carboraten [CHB₁₁H₅Cl₆]⁻, [CHB₁₁H₅Br₆]⁻, [CHB₁₁(CH₃)₅Br₆]⁻, [CHB₁₁F₁₁]⁻, [C(Et)B₁₁F₁₁]⁻, [CB₁₁(CF₃)₁₂]⁻ und B₁₂Cl₁₁N(CH₃)₃]⁻, Tetra (perfluoroalkoxy) aluminaten [Al(OR^{PF})₄]⁻ , Tris(perfluoroalkoxy)fluoroaluminaten [FAl(OR^{PF})₃]⁻, Hexakis(oxypentafluorotellur)antimonat [Sb(OTeF₅)₆]⁻, Tris(perfluoroalkoxy)fluoroaluminaten [FAl(OR^{PF})₃]⁻ und Hexakis(oxypentafluorotellur)antimonat [Sb(OTeF₅)₆]⁻.

8. Mischung **M** oder Verfahren nach Anspruch 5 bis 7, wobei die Reste **R^{y}** unabhängig voneinander C1-C3 Alkyl- oder Phenylreste bedeuten.

9. Mischung **M** oder Verfahren nach Anspruch 1 bis 8, wobei nicht mit den Verbindungen **A, B** und **C** reaktive Zusätze **D** anwesend sind, die ausgewählt werden aus Prozesshilfsstoffen, Füllstoffen, Stabilisatoren und Pigmenten.

10. Mischung **M** oder Verfahren nach Anspruch 1 bis 9, wobei die Verbindungen **A** und **B** durch eine oder mehrere chemische Bindungen miteinander verbunden sind.

## Claims

1. Hydrosilylable mixture **M** comprising
**(A)** a compound having at least one hydrogen atom directly bonded to Si,
**(B)** a compound comprising at least one carbon-carbon multiple bond and
**(C)** a compound comprising at least one available intramolecular cationic Si-H-Si moiety with silicon in oxidation state IV.

2. Method for hydrosilylation in which
**(A)** a compound having at least one hydrogen atom directly bonded to Si,
**(B)** a compound comprising at least one carbon-carbon multiple bond are reacted in the presence of
**(C)** a compound comprising at least one available intramolecular cationic Si-H-Si moiety with silicon in oxidation state IV.

3. Mixture **M** according to Claim 1 or method according to Claim 2, in which compound **A** having at least one hydrogen atom directly bonded to Si has the general formula I
**R¹R²R³Si-H** **(I),**
wherein the radicals **R¹, R²** and **R³** each independently have the definition hydrogen, halogen, silyloxy radical, hydrocarbon radical or hydrocarbonoxy radical,
wherein the carbon chain in the hydrocarbon radical or hydrocarbonoxy radical may be substituted by halogen atoms, wherein the carbon chain in the hydrocarbon radical or hydrocarbonoxy radical may be interrupted by non-adjacent oxygen, sulfur, N**R¹³**- or P**R¹⁴**- groups and wherein **R¹³** and **R¹⁴** each independently have the definition hydrogen or hydrocarbon radical.

4. Mixture **M** according to Claim 1 or 3 or method according to Claim 2 or 3, wherein the compounds **B** having at least one carbon-carbon multiple bond are selected from compounds having at least one carbon-carbon double bond of the general formula **IIIA**
R⁴R⁵C=CR⁶R⁷ **(IIIa)**,
and from compounds having at least one carbon-carbon triple bond of the general formula **IIIb**
R⁸CCR⁹ **(IIIb),**
wherein
**R⁴, R⁵, R⁶, R⁷, R⁸** and **R⁹** are each independently linear, branched, acyclic or cyclic, saturated or monounsaturated or polyunsaturated C1-C20 hydrocarbon radicals, wherein the carbon chain in the hydrocarbon radical or hydrocarbonoxy radical may be substituted by halogen atoms, wherein the carbon chain in the hydrocarbon radical or hydrocarbonoxy radical may be interrupted by non-adjacent oxygen, sulfur, N**R¹³**- or P**R¹⁴**- groups.

5. Mixture **M** according to Claim 1, 3 or 4 or method according to Claim 2, 3 or 4, wherein the compound **C** is a cationic Si(IV) compound of the general formula IV 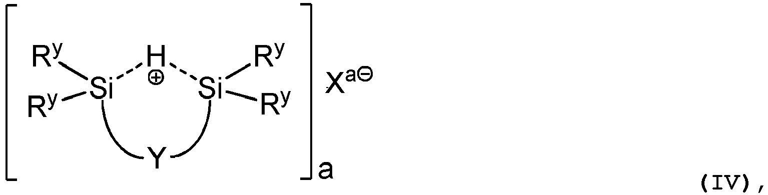 in which
**Y** is a divalent saturated or monounsaturated or polyunsaturated C2 to C50 hydrocarbon radical, which may be substituted by halogen atoms, silyl groups, silyloxy groups, alkoxy groups, thioether groups, NR¹⁵R¹⁶- groups or PR¹⁷R¹⁸- groups, or which may be interrupted by dialkylsilyl, alkylsilyl or non-adjacent oxygen, sulfur, =N-, -NR¹³-, =P- or -PR¹⁴-groups,
**R¹⁵, R¹⁶, R¹⁷** and **R¹⁸** have the definitions of **R¹³** and **R¹⁴** according to Claim 3,
**R^{y}** is selected from monovalent radicals and polyvalent radicals, which may also be linked to each other to form fused rings,
**X**^{**a**-} is an **a** valent anion, which does not react with the cationic silicon structure under the reaction conditions and
**a** has the values 1, 2, or 3.

6. Mixture **M** or method according to Claim 3, 4 or 5, wherein the silyloxy radical has the general formula **II**
**(SiO_{4/2})ₐ(R^{x}SiO_{3/2})_{b}(R^{x}₂SiO_{2/2})c(R^{x}₃SiO_{1/2})_{d}-** **(II)**,
in which
**R^{x}** are each independently hydrogen, halogen, unbranched, branched, linear, acyclic or cyclic, saturated or monounsaturated or polyunsaturated C1-C20 hydrocarbon radicals or unbranched, branched, linear or cyclic, saturated or monounsaturated or polyunsaturated C1-C20 hydrocarbonoxy radicals, wherein the carbon chain in the hydrocarbon radical or hydrocarbonoxy radical may be substituted by halogen atoms, wherein the carbon chain in the hydrocarbon radical or hydrocarbonoxy radical may be interrupted by non-adjacent oxygen, sulfur, N**R¹³**- or P**R¹⁴**- groups,
**a, b, c** and **d** are each independently integer values from 0 to 100 000, wherein the sum total of **a, b, c** and **d** together at least assumes the value 1.

7. Mixture **M** or method according to Claim 5 or 6, wherein **X⁻** is selected from BF₄⁻, ClO₄⁻, AlZ₄⁻, MF₆⁻ where **Z** = halogen and **M** = P, As or Sb, tetraarylborate anion, wherein the aryl radical is phenyl or fluorinated phenyl or phenyl substituted by perfluoroalkyl radicals, from monovalent polyhedral anion, alkoxy and aryloxy metallate ion, tetrachlorometallates [MCl₄]⁻ where M = Al, Ga, tetrafluoroborates [BF₄]⁻, hexafluorometallates [MF₆]⁻ where M = As, Sb, Ir, Pt, perfluoroantimonates [Sb₂F₁₁]⁻, [Sb₃F₁₆]⁻ and [Sb₄F₂₁]⁻, triflate (= trifluoromethanesulfonate) [OSO₂CF₃]⁻, tetrakis (trifluoromethyl) borate [B(CF₃)₄]⁻, tris(pentafluorophenyl)hydridometallates [MH(C₆F₅)₃]⁻ where M = B, Al, Ga, tetrakis (pentachlorophenyl) borate [B(C₆Cl₅)₄]⁻, tetrakis[(2,4,6-trifluoromethyl(phenyl)]borate {B[C₆H₂(CF₃)₃]}⁻, [bis[tris(pentafluorophenyl)]hydroxide {HO[B(C₆F₅)₃]₂}⁻, *closo*-carborates [CHB₁₁H₅Cl₆]⁻, [CHB₁₁H₅Br₆]⁻, [CHB₁₁(CH₃)₅Br₆]⁻, [CHB₁₁F₁₁]⁻, [C(Et)B₁₁F₁₁]⁻, [CB₁₁(CF₃)₁₂] ⁻ and B₁₂Cl₁₁N(CH₃)₃]⁻, tetra (perfluoroalkoxy) aluminates [Al(OR^{PF})₄]⁻, tris (perfluoroalkoxy) fluoroaluminates [FAl(OR^{PF})₃]⁻, hexakis(oxypentafluorotellurium)antimonate [Sb(OTeF₅)₆]⁻, tris(perfluoroalkoxy)fluoroaluminates [FAl(OR^{PF})₃]⁻ and hexakis(oxypentafluorotellurium)antimonate [Sb(OTeF₅)₆]⁻.

8. Mixture **M** or method according to Claims 5 to 7, wherein the radicals **R^{y}** are each independently C1-C3 alkyl or phenyl radicals.

9. Mixture **M** or method according to Claims 1 to 8, wherein additives **D** are present, that are not reactive to compounds **A, B** and **C,** which are selected from processing aids, fillers, stabilizers and pigments.

10. Mixture **M** or method according to Claims 1 to 9, wherein the compounds **A** and **B** are bonded to each other by one or more chemical bonds.

## Revendications

1. Mélange M pouvant être hydrosilylé contenant
(A) un composé doté d'au moins un atome d'hydrogène directement lié à Si,
(B) un composé qui contient au moins une liaison multiple carbone-carbone et
(C) un composé qui contient au moins un groupe Si-H-Si cationique présent de manière intramoléculaire avec silicium à l'état d'oxydation IV.

2. Procédé pour l'hydrosilylation, dans lequel
(A) un composé doté d'au moins un atome d'hydrogène directement lié à Si,
(B) un composé qui contient au moins une liaison multiple carbone-carbone sont transformés en présence de
(C) un composé qui contient au moins un groupe Si-H-Si cationique présent de manière intramoléculaire avec silicium à l'état d'oxydation IV.

3. Mélange M selon la revendication 1 ou procédé selon la revendication 2, dans lequel le composé A doté d'au moins un atome d'hydrogène directement lié à Si présente la formule générale I
**R¹R²R³Si-H** **(I)**,
les radicaux R¹, R² et R³, indépendamment les uns des autres, possédant la signification hydrogène, halogène, radical silyloxy, radical hydrocarboné ou radical hydrocarboxy,
la chaîne carbonée dans le radical hydrocarboné ou le radical hydrocarboxy pouvant être substituée par des atomes d'halogène, la chaîne carbonée dans le radical hydrocarboné ou le radical hydrocarboxy pouvant être interrompue par des groupes non voisins de type oxygène, soufre, NR¹³ ou PR¹⁴, et R¹³ et R¹⁴, indépendamment l'un de l'autre, possédant la signification hydrogène ou radical hydrocarboné.

4. Mélange M selon la revendication 1 ou 3 ou procédé selon la revendication 2 ou 3, les composés B dotés d'au moins une liaison multiple carbone-carbone sont choisis parmi des composés dotés d'au moins une double liaison carbone-carbone de formule générale IIIa
**R⁴R⁵C=CR⁶H⁷** **(IIIa),**
et parmi des composés dotés d'au moins une triple liaison carbone-carbone de formule générale IIIb
**R⁸CCR⁹** **(IIIb),**
R⁴, R⁵, R⁶, R⁷, R⁸ et R⁹, indépendamment les uns des autres, signifiant un radical hydrocarboné linéaire, ramifié, acyclique ou cyclique, saturé monoinsaturé ou polyinsaturé en C₁₋₂₀, la chaîne carbonée dans le radical hydrocarboné ou le radical hydrocarboxy pouvant être substituée par des atomes d'halogène, la chaîne carbonée dans le radical hydrocarboné ou le radical hydrocarboxy pouvant être interrompue par des groupes non voisins de type oxygène, soufre, NR¹³ ou PR¹⁴.

5. Mélange M selon la revendication 1, 3 ou 4 ou procédé selon la revendication 2, 3 ou 4, le composé C étant un composé cationique de Si(IV) de formule générale IV 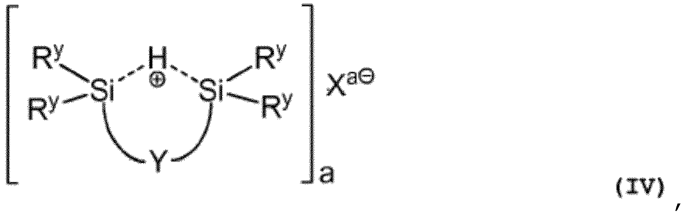 dans laquelle
Y signifie un radical hydrocarboné bidentate saturé ou monoinsaturé ou polyinsaturé en C₂₋₅₀, qui peut être substitué par des atomes d'halogène, des groupes silyle, des groupes silyloxy, des groupes alcoxy, des groupes thioéther, des groupes NR¹⁵R¹⁶ ou PR¹⁷R¹⁸, ou qui peut être interrompu par des groupes dialkylsilyle, alkylsilyle, ou par des groupes non voisins oxygène, soufre, =N-, -NR¹³-, =P-, ou -PR¹⁴-,
R¹⁵, R¹⁶, R¹⁷ et R¹⁸ possédant les significations de R¹³ et R¹⁴ selon la revendication 3,
R^{y} étant choisi parmi des radicaux monovalents et des radicaux polyvalents, qui peuvent être reliés entre eux pour la formation de cycles annelés,
X^{a-} signifiant un anion a-valent, qui ne réagit pas dans les conditions de réaction avec la structure de silicium cationique et
a possédant les valeurs 1, 2 ou 3.

6. Mélange M ou procédé selon la revendication 3, 4 ou 5, le radical silyloxy présentant la formule générale II
**(SiO_{4/2})ₐ(R^{x}SiO_{3/2})_{b}(R^{x}₂SiO_{2/2})_{c}(R^{x}₃SiO_{1/2})_{d}⁻** **(II),**
dans laquelle
R^{x}, indépendamment les uns des autres, signifient hydrogène, halogène, un radical hydrocarboné non ramifié, ramifié, linéaire, acyclique ou cyclique, saturé ou monoinsaturé ou polyinsaturé en C₁₋₂₀ ou un radical hydrocarboxy non ramifié, ramifié, linéaire ou cyclique, saturé ou monoinsaturé ou polyinsaturé en C₁₋₂₀, la chaîne carbonée dans le radical hydrocarboné ou le radical hydrocarboxy pouvant être substituée par des atomes d'halogène, la chaîne carbonée dans le radical hydrocarboné ou le radical hydrocarboxy pouvant être interrompue par des groupes non voisins de type oxygène, soufre, NR¹³ ou PR¹⁴,
a, b, c et d, indépendamment les uns des autres, signifiant des valeurs entières de 0 à 100 000, la somme de a, b, c et d ensemble prenant au moins la valeur 1.

7. Mélange M ou procédé selon la revendication 5 ou 6, X⁻ étant choisi parmi BF₄⁻, ClO₄⁻, AlZ₄⁻, MF₆⁻ avec Z = halogène et M = P, As ou Sb, un anion tétraarylborate, le radical aryle signifiant phényle ou phényle fluoré ou phényle substitué par des radicaux perfluoroalkyle, parmi un anion monovalent polyédrique, un ion alcoxymétallate ou aryloxymétallate, des tétrachlorométallates [MCl₄]⁻ avec M = Al, Ga, des tétrafluoroborates [BF₄]⁻, des hexafluorométallates [MF₆]⁻, avec M = As, Sb, Ir, Pt, des perfluoroantimonates [Sb₂F₁₁]⁻, [Sb₃F₁₆]⁻ et [Sb₄F₂₁]⁻, triflate (= trifluorométhanesulfonate) [OSO₂CF₃]⁻, tétrakis(trifluorométhyl)borate [B(CF₃)₄]⁻, des tris(pentafluorophényl)hydridométallates [MH(C₆F₅)₃]⁻ avec M = B, Al, Ga, tétrakis(pentachlorophényl)borate [B(C₆Cl₅)₄]⁻, tétrakis[(2,4,6-trifluorométhyl(phényl)]borate {B[C₆H₂(CF₃)₃]}⁻, hydroxyde de [bis[tris(pentafluorophényl)]{OH[B(C₆F₅)₃]₂}⁻, des closo-carborates [CHB₁₁H₅Cl₆]⁻, [CHB₁₁H₅Br₆]⁻, [CHB₁₁(CH₃)₅Br₆]⁻, [CHB₁₁F₁₁]⁻, [C(Et)B₁₁F₁₁]⁻, [CB₁₁(CF₃)₁₂]⁻ et [B₁₂Cl₁₁N(CH₃)₃]⁻, des tétra(perfluoroalcoxy) aluminates [Al(OR^{PF})₄]⁻, des tris(perfluoroalcoxy)fluoroaluminates [FAl(OR^{PF})₃]⁻, hexakis(oxypentafluorotellure)antimonate [Sb(OTeF₅)₆]⁻, des tris(perfluoroalcoxy)fluoroaluminates [FAl(OR^{PF})₃]⁻, et hexakis(oxypentafluorotellure)antimonate [Sb(OTeF₅)₆]⁻.

8. Mélange M ou procédé selon les revendications 5 à 7, les radicaux R^{y} signifiant indépendamment les uns des autres des radicaux C₁₋₃-alkyle ou des radicaux phényle.

9. Mélange M ou procédé selon les revendications 1 à 8, des additifs D, non réactifs avec les composés A, B et C, sont présents, qui sont choisis parmi des auxiliaires de procédé, des charges, des stabilisants et des pigments.

10. Mélange M ou procédé selon les revendications 1 à 9, les composés A et B étant reliés l'un à l'autre par une ou plusieurs liaisons chimiques.
